Europäisches Patentamt

European Patent Office

Office européen des brevets

(19)

(11) **EP 0 647 843 B1**

(12) **EUROPEAN PATENT SPECIFICATION**

(45) Date of publication and mention
of the grant of the patent:
**22.07.1998 Bulletin 1998/30**

(51) Int Cl.6: **G01M 17/04**

(21) Application number: **94115944.4**

(22) Date of filing: **10.10.1994**

(54) **System for measuring the damping coefficient of vehicle-mounted shock absorbers**

Dämpfungskoeffizient-Messsystem von im Kraftfahrzeug angeordneten Stossdämpfern

Système de mesure du coefficient d'amortissement d'amortisseurs de choc montés sur un véhicule

(84) Designated Contracting States:
**BE DE ES FR IT**

(30) Priority: **11.10.1993 IT CO930013**

(43) Date of publication of application:
**12.04.1995 Bulletin 1995/15**

(73) Proprietor: **Buzzi, Carlo**
**22054 MANDELLO DEL LARIO (COMO) (IT)**

(72) Inventor: **Buzzi, Carlo**
**22054 MANDELLO DEL LARIO (COMO) (IT)**

(74) Representative: **Modiano, Guido, Dr.-Ing. et al**
**Modiano & Associati S.r.l.**
**Via Meravigli, 16**
**20123 Milano (IT)**

(56) References cited:
**EP-A- 0 476 746**       **FR-A- 2 354 553**
**US-A- 3 902 352**

**Description**

Devices for measuring the degree of efficiency of motor vehicle suspensions without having to remove the shock absorber from the vehicle are well-known in the art. Several different principles are used for this purpose. For example, the principle of making a vehicle-supporting platform oscillate at variable speeds and of measuring the force transferred to the ground by the suspension is used.

If the minimum contact force between the platform and the wheel is obtained in a test in which the oscillation frequency is changed, and if this value is correlated with the static force (weight) of the vehicle, one obtains a value that according to the EUSAMA (European Shock Absorber Manufacturer Association), publication TS0276, is representative of the roadholding of the vehicle and of the state of the suspension. This has been assuredly proved and used on commercially available devices, but the read value depends not only on the state of the shock absorber, which is a mechanical element that is specifically meant to reduce the oscillations of the vehicle and to ensure traveling comfort and safety, but also on constructive qualities that characterize the suspension, such as the ratio between suspended masses and non-suspended masses, the type of tire, the inflation pressure, and the suspension type. Dependency on numerous parameters in practice prevents the above defined value from being adequately representative of the state of the shock absorber in itself and therefore prevents this value from being interpreted unequivocally if one seeks to give a certain indication of the need to replace the shock absorber. Similar problems have been found in many other commercially available shock-absorber testing machines, where dependency of the measurement on many physical parameters of the suspension leads to the need to interpret the data obtained from the measurement instrument by using tables that are compiled for each individual vehicle. This of course leads to approximations and to wide margins of error, due to the intrinsic difficulty in keeping the tables updated. Furthermore, if one considers the common habit of some vehicle manufacturers of fitting different shock absorbers on manufactured cars belonging to the same model depending on the market on which they are to be sold, it is evident that such a comparison method based on tables is scarcely reliable.

FR-A-2 354 553 discloses a device for measuring the damping of a motor vehicle suspension comprising: a platform that can vibrate with a fixed amplitude and a variable frequency; a force sensor that can detect, at any time, the forces that act on the platform; a motion detecting means adapted to detect the instantaneous movement of the platform; and multiplying means receiving in input the output of the force sensor and of the motion detecting means and adapted to extract the parallel component of the force with respect to the movement, a scalar product of the parallel components of the force and the motion being determined.

US-A-3 902 352 discloses a device for checking the efficiency of shock absorbers on vehicles. The relative phase between the force and the movement are used to determine a damping coefficient of the shock absorbers.

The present invention relates to a method for testing the shock absorber while it is mounted on a vehicle so as to unequivocally determine the properties of said shock absorber in order to allow to easily inspect the correct operation of said shock absorber. The system described hereinafter in fact seeks to measure, as accurately as possible, a parameter which is correlated with the damping of the suspension. A vehicle can be likened, in practice, to an elastic system with several degrees of freedom, as extensively described for example in the book by Giancarlo Genta: "Meccanica dell'autoveicolo" (Levrotto e Bella, Turin). Accordingly, there is a very large number of ways in which the vehicle can vibrate when subjected to oscillations. Since the elastic system is very complex, it is not practically possible to create a mathematical model that accurately simulates the behavior of the vehicle. Theory (for example "Dinamica e vibrazioni delle macchine", Giorgio Diana, Spiegel) however allows to deduce that the motion can be described as the sum of $n$ systems with one degree of freedom that can be studied separately; each system expresses one of the $n$ ways of vibrating. In particular, in the case of resonances the contribution of the corresponding way of vibrating is essential. It is furthermore known in general that any structure, when energized with a sinusoidal vibration, reacts by producing in response, in any point of its body, a sinusoidal wave whose frequency is equal to that of the applied vibration but whose amplitude and phase are different. The relationship between energization and response is correlated with the dynamic properties of the structure. The response can be viewed as the sum of two rotating vectors whose directions are respectively identical and perpendicular to the direction of the applied vibration. The vector whose direction is the same as that of the applied vibration is referenced as "real component" and is representative of phenomena that are correlated with masses and elasticities of springs, whereas the perpendicular vector, referenced as "imaginary component", is closely correlated with the existence of damping.

The present invention relates to a device as defined in claim 1 for measuring the efficiency of shock absorbers by measuring and processing the real and imaginary components of the response of the vibrating system constituted by the vehicle.

The invention is explained hereinafter by reference to the drawings wherein:

Fig. 1 diagrammatically shows in elevational view a device according to the invention while acting on a wheel of a motor vehicle and thereby on the suspension.

Fig. 2 shows the arrangement of motion transducers for detecting the movement of the cam of Fig. 1.

Fig. 3 is a block diagram of the circuit for determining and displaying the characteristics of the motor vehicle suspension from the response of the suspension system to a sinusoidal mechanical input.

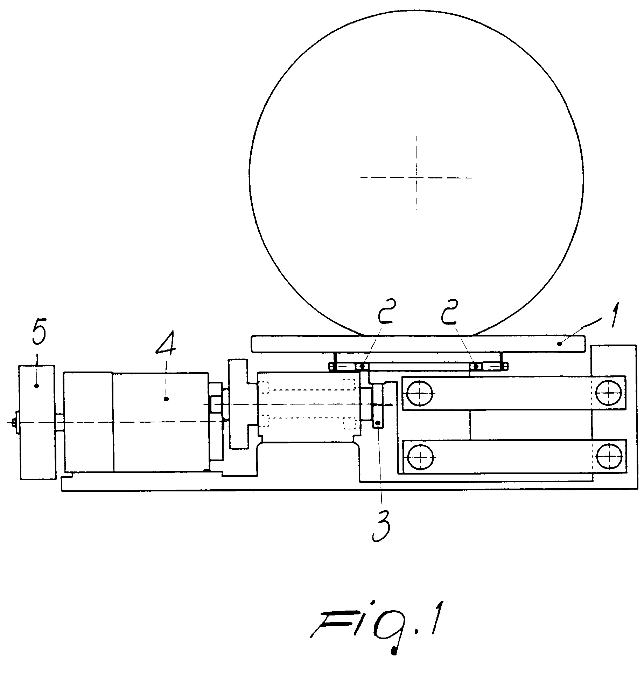

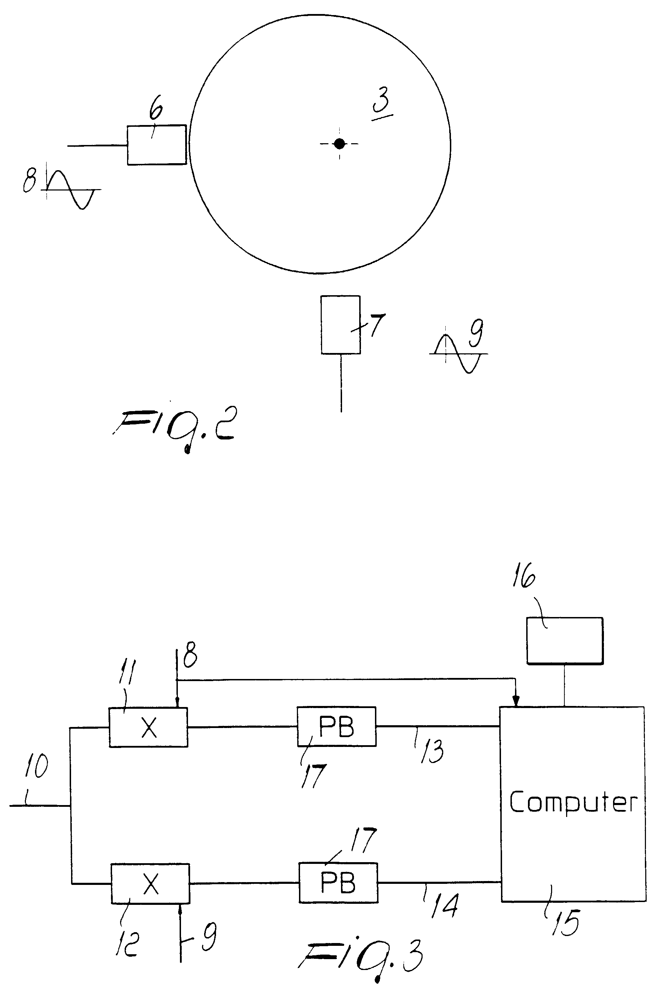

In particular, it is possible to measure the above-mentioned real and imaginary components by using (Fig. 1) a platform (1) that vibrates with a fixed amplitude of +/- 3 mm, for example, measuring the force transferred onto said platform by the wheel. The force is detected by the appropriate transducer (2), which is located between the platform and the energizing cam (3). The cam is driven by a motor (4) which is kept in motion by a flywheel (5) during deceleration. By means of a motion transducer (6) connected to the moving cam it is possible to obtain a signal that is proportional to the vibration generated by the moving platform. The signal (8) of said transducer is sinusoidal and reflects the movement of the platform. A second transducer (7) allows to obtain a signal (9) that is identical to the first one but is phase shifted by 90°. These two reference signals, correlated with the vibration source, can be obtained in several other ways, for example by means of an alternator or with a digital system by processing signals detected by an encoder. Several applications of this type are reported in the theory of wattmeter filters used for example in balancing machines. For example, Italian patent 749713 or US patent 4298948 are referenced. A signal (10) that is proportional to the force transferred to the platform originates from the force transducer (2). The circuit of figure 3 schematically shows the device for separating the real and imaginary components of the signal. The signal (10) is multiplied in the multipliers (11) and (12) with the sine and cosine values (8-9) that originate from the transducers (6) and (7). The result of the multiplication is averaged, by low-pass filtering means 17, so as to obtain the DC content of said results. These new signals (13) and (14) represent the real (or parallel) and imaginary (or perpendicular) components of the response of the mechanical system to the sinusoidal energization. The signals 13 and 14 are sent to calculating means 15 for further processing. A frequency signal, advantageously from transducer 6, is also sent to the calculating means 15, which is preferably an electronic computer. The calculating means are furthermore provided with a visual display 16.

The theory of this type of application can be obtained from the above mentioned patents. The two components, the real one and the imaginary one, can vary according to the energization frequency and represent the response of the system in the range of the energization frequency. It is possible to extract from this response, and from the energization frequency, indications that are sufficient to determine the efficiency of the suspension and particularly the characteristics of the shock absorber.

Once the real and imaginary components of the force as a function of frequency have been obtained, it is possible to accurately extract the resonance frequency at which the real component cancels out; in order to obtain this result it is sufficient to process all the measurements in a computer 15, which then determines the resonance frequency by examining the amplitude and sign of the real component, so as to determine the frequency at which this component cancels out. The following function can then be easily obtained by the calculating means 15, by means of a computer program stored in the computer 15:

$$\Phi(\Omega) = \text{artg} \frac{\text{imaginary component}}{\text{real component}}$$

which indicates the relative phase $\Phi$ between the forces and the movement as a function of the frequency $\Omega$. The following value at system resonance can be easily obtained from the above function:

$$\frac{\delta\Phi}{\delta\Omega} = A$$

At specific values of the frequency $\Omega$, correspondent values of the phase $\Phi$ are obtained. The derivative of the two values is obtained as the gradient of a line that intersects a plurality of values of $\Phi$ in the proximity of the resonant frequency $W_0$ of the system.

This value, which is the derivative $(\delta\Phi/\delta\Omega)$ of the relative phase $(\Phi)$ between the force and the movement with respect to the frequency $(\Omega)$ in the vicinity of a mechanical resonance $(W_0)$ of the system, is highly significant, since it fully represents the damping of the suspension. When the system vibrates in resonant conditions and the contribution of non-resonant modes is negligible, it behaves as if it had a single degree of freedom. In these conditions, the equation of motion of the system is:

$$m \cdot dx^2/dt^2 + r \cdot dx/dt + k \cdot x = F_0 \cdot e^{i\Omega t}$$

where:

t = time;
x = displacement of the system;

m = effective mass of the system;
r = damping constant;
k = rigidity constant;
$F_0$ = applied vibration;
$\Omega$ = applied pulse;
$r_c$ = critical damping = 2 $mw_0$ , where $w_0$ is the resonant frequency.

The solution of the above equation can be written in the following form:

$$x = x_0 \cdot e^{i\Omega t}$$

By replacing this expression in the equation of motion one obtains:

$$x_0 = \frac{F_0}{k - \Omega^2 \cdot m + i \cdot \Omega \cdot r} = \frac{F_0 \cdot (k - \Omega^2 \cdot m) - i \cdot \Omega \cdot r}{(k - \Omega^2 \cdot m)^2 + (\Omega \cdot r)^2} \qquad (1)$$

The transfer function, which can be obtained from expression (1), is defined by a modulus that is given by the ratio between the response $x_0$ of the system and the force $F_0$ and by a phase $\Phi$.

The phase $\Phi$ is given by:

$$tg\Phi = \frac{-\Omega \cdot r}{k - \Omega^2 \cdot m}$$

from which one obtains:

$$\Phi = arctg \frac{-\Omega \cdot r}{k - \Omega^2 \cdot m} = arctg\ \alpha$$

The derivative of $\Phi$ with respect to $\Omega$ is:

$$\frac{\delta\Phi}{\delta\Omega} = \frac{\delta arctg\ \alpha}{\delta\alpha} \cdot \frac{\delta\alpha}{\delta\Omega} = \frac{1}{1 + \alpha^2} \cdot \frac{\delta\alpha}{\delta\Omega}$$

and

$$\frac{\delta\Phi}{\delta\Omega} = \frac{1}{1 + ((\Omega \cdot r)/(k - \Omega^2 \cdot m))^2} \cdot \left[ \frac{-r}{k \cdot \Omega^2 \cdot m} + \frac{\Omega \cdot r}{(k - \Omega^2 \cdot m)^2} \cdot (-2 \cdot \Omega \cdot m) \right]$$

from which:

$$\frac{\delta\Phi}{\delta\Omega} = \frac{(k - \Omega^2 \cdot m)^2}{(k - \Omega^2 \cdot m)^2 + (\Omega \cdot r)^2} \cdot \left[ \frac{-r}{k \cdot \Omega^2 \cdot m} \right] \cdot \frac{2 \cdot \Omega^2 \cdot m \cdot r}{(k - \Omega^2 \cdot m) + (\Omega \cdot r)^2}$$

When the system is in resonant conditions, it behaves as if it had a single degree of freedom and its proper pulse $W_0$ coincides with the pulse of the applied vibration n, so that:

4

$$\frac{\delta\Phi}{\delta\Omega} = \frac{-2w_0^{\,2}\cdot m\cdot r}{(w_0\cdot r)^2} = \frac{-2\cdot m}{r} = \frac{-1}{\dfrac{r}{2\cdot m}\cdot\dfrac{w_o}{w_0}} = \frac{-1}{\dfrac{r}{r_c}\cdot w_0}$$

where $r_c$ is equal to $2mW_0$, that is the critical damping value.

Therefore, once the proper pulse $W_0$ and the tangent of the phase $\Phi$ at said pulse $W_0$ are known, it is possible to obtain the value of the damping coefficient $h = r/r_c$, since:

$$\frac{\delta\Phi}{\delta\Omega} = \frac{1}{\dfrac{r}{r_c}\cdot w_0}$$

from which:

$$h = \frac{r}{r_c} = \frac{1}{\dfrac{\delta\Phi}{\delta\Omega}\cdot w_0}$$

The value of the damping coefficient h thus obtained by means of a simple computer program, stored in the calculating means 15, is shown on a screen or display 16. The value obtained has considerable advantages with respect to other known measurements methods performed to determine the degree of efficiency of vehicle suspensions. This nondimensional value in fact completely and unequivocally represents the damping ability of the suspension and allows to qualify the manner in which a vehicle is damped.

In other words, the datum thus obtained is suitable for being used as a comparison value even for different vehicles. In particular, for soft suspensions the coefficient is always in the range of 0.2-0.3; for more rigid vehicles, it is 0.4, etcetera.

Furthermore, if one observes that:

$$h = \frac{r}{r_c} = \frac{r}{2m\cdot w_0} = \frac{1}{\dfrac{\delta\Phi}{\delta\Omega}\cdot w_0}$$

one obtains:

$$r = 2m\cdot\frac{1}{\dfrac{\delta\Phi}{\delta\Omega}}$$

Since the damping constant r thus obtained is a function exclusively of the vibrating mass, not of the constant of the spring constituted by the tire, it is possible to obtain a coefficient that is linked to the shock absorber and to the mass of the suspension, not to the pressure of the tire. This is particularly useful, since it avoids one of the most important drawbacks of roadholding measurement systems, where the influence of tire pressure is considerable.

Another useful method for using the results of the test is as follows: if the real 13 and imaginary 14 components of the force as a function of the frequency are known, and assuming that the system has a single degree of freedom (as described above), it is possible to determine the values of the coefficients m, r, and k of equation (1), which represents the way in which the system vibrates. It is in fact sufficient to solve a system of equations (1) with m, r, and k as the unknowns, where $\Omega$, $F_0$, and x, obtained in two or more measurements performed at different frequencies, are introduced as known constants. This method completely identifies the vibrating system with a single degree of freedom that best simulates the vehicle close to resonance. Inspection of the characteristics of this vibrating system allows to obtain useful information on the efficiency of the suspension from the point of view of damping as well as from the point of view of the other characteristic parameters.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Device for measuring the damping of a vehicle suspension, comprising:

    a platform (1) that can vibrate with a fixed amplitude and a variable frequency,
    a force sensor (2) that can detect, at any time, the forces that act on the platform,
    motion detecting means (6,7) adapted to detect the instantaneous movement of the platform (1),
    multiplying means (11,12) receiving in input the output of said force sensor (2) and of said motion detecting means (6,7) and adapted to extract the parallel component (13) and the perpendicular component (14) of the force (10) with respect to the movement as a function of the frequency, and
    calculating means (15) for extracting the derivative ($\delta\Phi/\delta\Omega$) of the relative phase ($\Phi$) between the force and the movement with respect to the frequency ($\Omega$) in the vicinity of a mechanical resonance ($W_0$) of the system.

2. Device according to claim 1, characterized in that said calculating means (15) are adapted to calculate a damping coefficient (h) by taking the inverse of the product of the derivative ($\delta\Phi/\delta\Omega$) of the relative phase between resonant motion and force with respect to the frequency and the resonance frequency ($W_0$).

3. Device according to claim 1, characterized in that said calculating means (15) are adapted to calculate a value proportional to a damping constant (r) by taking the inverse of the derivative ($\delta\Phi/\delta\Omega$) of the relative phase between resonant motion and force with respect to the frequency.

4. Device according to any of the preceding claims, characterized in that said derivative ($\delta\Phi/\delta\Omega$) is obtained as an average of multiple measurements of said relative phase ($\Phi$) calculated in a frequency range ($\Omega$) close to the resonance frequency ($W_0$).

5. Device according to any of the preceding claims, characterized in that it comprises display means (16) adapted to display said calculated values.

6. Device according to claim 1, characterized in that said motion detecting means comprise a first transducer (6) adapted to detect a first signal proportional to the vibration generated by said platform (1), and a second transducer (7) adapted to detect a second signal which is identical to said first signal but is phase shifted by 90°.

7. Device according to claim 6, characterized in that said multiplying means comprise a first multiplier (11) receiving in input the output of said force sensor (2) and of said first transducer (6) and a second multiplier (12) receiving in input the output of said force sensor (2) and of said second transducer.

**Patentansprüche**

1. Vorrichtung zum Messen der Dämpfung einer Fahrzeugaufhängung, mit:

    einer Plattform (1), die mit einer bestimmten Amplitude und einer veränderlichen Frequenz vibrieren kann,
    einem Kraftsensor (2), der zu jeder Zeit die auf die Plattform einwirkenden Kräfte erfassen kann,
    einer Bewegungserfassungseinrichtung (6, 7), die ausgelegt ist, die momentane Bewegung der Plattform (1) zu erfassen,
    einer Multiplikatoreinrichtung (11, 12), die im Eingang die Ausgangsgröße des Kraftsensors (2) und der Bewegungserfassungseinrichtung (6, 7) aufnimmt und ausgelegt ist, die parallele Komponente (13) und die senkrechte Komponente (14) der Kraft (10) bezüglich der Bewegung als eine Funktion der Frequenz zu erfassen, und
    einer Berechnungseinrichtung (15) zum Ermitteln der Ableitung ($\delta\Phi/\delta\Omega$) der relativen Phase ($\Phi$) zwischen der Kraft und der Bewegung bezüglich der Frequenz ($\Omega$) in der Nähe der mechanischen Resonanz ($W_0$) des Systems.

2. Vorrichtung nach Anspruch 1, **dadurch gekennzeichnet,** daß die Berechnungseinrichtung (15) ausgelegt ist, einen Dämpfungskoeffizienten (h) zu errechnen, indem der Kehrwert des Produktes aus der Ableitung ($\delta\Phi/\delta\Omega$) der relativen Phase zwischen Resonanzbewegung und Kraft bezüglich der Frequenz und der Resonanzfrequenz ($W_0$) gebildet wird.

3.  Vorrichtung nach Anspruch 1, **dadurch gekennzeichnet,** daß die Berechnungseinrichtung (15) ausgelegt ist, einen Wert proportional einer Dämpfungskonstanten (r) zu errechnen, indem der Kehrwert der Ableitung ($\delta\Phi/\delta\Omega$) der relativen Phase zwischen Resonanzbewegung und Kraft bezüglich der Frequenz gebildet wird.

4.  Vorrichtung nach einem der vorhergehenden Ansprüche, **dadurch gekennzeichnet,** daß die Ableitung ($\delta\Phi/\delta\Omega$) erhalten wird als Durchschnitt mehrerer Messungen der relativen Phase ($\Phi$), errechnet in einem Frequenzbereich ($\Omega$) nahe der Resonanzfrequenz ($W_0$).

5.  Vorrichtung nach einem der vorhergehenden Ansprüche, **dadurch gekennzeichnet,** daß sie eine Anzeigeeinrichtung (16) aufweist, die geeignet ist, die errechneten Werte anzuzeigen.

6.  Vorrichtung nach Anspruch 1, **dadurch gekennzeichnet,** daß die Bewegungserfassungseinrichtung einen ersten Wandler (6) aufweist, der ausgelegt ist, ein erstes Signal, das proportional zur Vibration, die durch die Plattform (1) erzeugt wird, zu erfassen, und einen zweiten Wandler (7) aufweist, der ausgelegt ist, ein zweites Signal, das identisch mit dem ersten Signal, aber um 90° phasenverschoben ist, zu erfassen.

7.  Vorrichtung nach Anspruch 6, **dadurch gekennzeichnet,** daß die Multiplikatoreinrichtung einen ersten Multiplizierer (11) aufweist, der im Eingang den Ausgangswert des Kraftsensors (2) und des ersten Wandlers (6) aufnimmt, und einen zweiten Multiplizierer (12) aufweist, der im Eingang den Ausgangswert des Kraftsensors (2) und des zweiten wandlers aufnimmt.

**Revendications**

1.  Dispositif pour mesurer l'amortissement d'une suspension de véhicule, comprenant :

    une plate-forme (1) qui peut vibrer à amplitude fixe et à fréquence variable,
    un capteur de force (2) qui peut mesurer, à tout instant, les forces qui agissent sur la plate-forme,
    des moyens de mesure de déplacement (6, 7) aptes à mesurer le déplacement instantané de la plate-forme (1),
    des moyens de multiplication (11, 12) recevant en entrée les signaux de sortie dudit capteur de force (2) et desdits moyens de mesure de déplacement (6, 7) et aptes à extraire la composante parallèle (13) et la composante perpendiculaire (14) de la force (10) par rapport au déplacement en fonction de la fréquence et
    des moyens de calcul (15) pour extraire la dérivée ($\delta\Phi/\delta\Omega$) de la phase relative ($\Phi$) entre la force et le déplacement par rapport à la fréquence ($\Omega$) à proximité d'une résonance mécanique ($W_0$) du système.

2.  Dispositif selon la revendication 1, caractérisé en ce que lesdits moyens de calcul (15) sont aptes à calculer un quotient d'amortissement (h) en prenant l'inverse du produit de la dérivé ($\delta\Phi/\delta\Omega$) de la phase relative entre le déplacement résonnant et la force résonnante par rapport à la fréquence et de la fréquence de résonance ($W_0$).

3.  Dispositif selon la revendication 1, caractérisé en ce que lesdits moyens de calcul (15) sont aptes à calculer une valeur proportionnelle à une constante d'amortissement (r) en prenant l'inverse de la dérivée ($\delta\Phi/\delta\Omega$) de la phase relative entre le déplacement résonnant et la force résonnante par rapport à la fréquence.

4.  Dispositif selon l'une quelconque des revendications précédentes, caractérisé en ce que ladite dérivée ($\delta\Phi/\delta\Omega$) est obtenue comme une moyenne de mesures multiples de ladite phase relative ($\Phi$) calculée dans une gamme de fréquence ($\Omega$) proche de la fréquence de résonance ($W_0$).

5.  Dispositif selon l'une quelconque des revendications précédentes, caractérisé en ce qu'il comporte des moyens d'affichage (16) aptes à afficher lesdites valeurs calculées.

6.  Dispositif selon la revendication 1, caractérisé en ce que lesdits moyens de mesure de déplacement comportent un premier transducteur (6) apte à capter un premier signal proportionnel à la vibration générée par ladite plate-forme (11), et un deuxième transducteur (7) apte à capter un deuxième signal qui est identique audit premier signal mais dont la phase est décalée de 90°.

7.  Dispositif selon la revendication 6, caractérisé en ce que lesdits moyens de multiplication comportent un premier multiplicateur (11) recevant en entrée le signal de sortie dudit capteur de force (2) et dudit premier transducteur (6) et un deuxième multiplicateur (12) recevant en entrée le signal de sortie dudit capteur de force (2) et dudit

deuxième transducteur.

*Fig.1*

Fig.2

Fig.3